# EUROPÄISCHE PATENTSCHRIFT

(11) **EP 2 069 095 B1**
(45) Veröffentlichungstag und Bekanntmachung des Hinweises auf die Patenterteilung: **09.11.2011**
(21) Anmeldenummer: 07803272.9
(22) Anmeldetag: 06.09.2007
(51) Int. Cl.: B23H 3/02, B23H 7/18

(54) **VERFAHREN ZUR EINSTELLUNG EINES ABSTANDES ZWISCHEN ELEKTRODE UND WERKSTÜCK**
METHOD FOR ADJUSTING A DISTANCE BETWEEN AN ELECTRODE AND A WORKPIECE
PROCÉDÉ D'AJUSTEMENT D'UNE DISTANCE ENTRE UNE ÉLECTRODE ET UNE PIÈCE À USINER

(30) Priorität: 27.09.2006 DE 102006045664
(43) Veröffentlichungstag der Anmeldung: 17.06.2009
(73) Patentinhaber: Robert Bosch GmbH, 70442 Stuttgart (DE)
(72) Erfinder: HACKENBERG, Juergen, 74343 Sachsenheim (DE); GRUHN, Herbert, 71638 Ludwigsburg (DE); REITZLE, Alexander, 89231 Neu-ulm (DE); KRINGS, Norman, 71636 Ludwigsburg (DE)
(86) Internationale Anmeldenummer: PCT/EP2007/059312
(87) Internationale Veröffentlichungsnummer: WO 2008/037574

(56) Entgegenhaltungen:
- WO-A-01/78930
- US-A- 4 257 865

## Beschreibung

### Stand der Technik

Die Erfindung betrifft ein Verfahren zur Einstellung eines Abstandes zwischen einer Elektrode und einem Werkstück bei der elektrochemischen Metallbearbeitung, wobei die Elektrode von einem oszillierenden Antriebssystem bewegt wird. Die Erfindung betrifft auch eine Vorrichtung gemäss dem Oberbegriff des Anspruchs 7.

Ein derartiges Verfahren und eine deartige Vorrichtung sind aus US 4 257865 bekannt.

Durch elektrochemische Metallbearbeitung (ECM) können Vertiefungen mit vorgegebener Geometrie in metallische Werkstücke eingebracht werden. Um zu vermeiden, dass sich die Vertiefung durch Auflösung der Wände radial aufweitet, wird der Arbeitsspalt zwischen Elektrode und Werkstück möglichst klein gewählt Üblicherweise werden hierbei oszillierende Elektroden eingesetzt. Diese geben jeweils dann einen Strompuls ab, wenn der Abstand zwischen Elektrode und Werkstück am kleinsten ist Der Spalt zwischen dem Werkzeug und der Elektrode wird dabei als Arbeitsspalt bezeichnet

Zur Regelung des Arbeitsspaltes werden derzeit Auswertungen des Spannungs- oder des Stromsignales verwendet Weiterhin sind auch Methoden bekannt, die sich einer Messung des Widerstandes bedienen. Diese Methoden erlauben jeweils eine relative Messung und Bestimmung des Arbeitsspaltes. Dabei beruhen sie auf der Tatsache, dass sich die gemessenen Signale in Abhängigkeit der Größe des Arbeitsspaltes verändern. So sinkt zum Beispiel der Widerstand bei abnehmendem Arbeitsspalt

Nachteil der Methoden, bei denen der Arbeitsspalt durch Auswertung des Spannungs- oder Stromsignals beziehungsweise durch Messungen des Widerstandes erfolgt, ist, dass die gemessenen Signale vom Zustand des Elektrolyten im Arbeitsspalt abhängen. So ändert sich zum Beispiel während der Bearbeitung, d. h. während ein Strom- beziehungsweise Spannungspuls an die Elektroden angelegt ist, die Zusammensetzung des Elektrolyten. Diese Änderung erfolgt zum Beispiel durch Elektrolyse des Wassers oder die Auflösung von Metallionen aus dem Werkstück. Hieraus resultiert eine Überlagerung der Effekte der Annäherung, zum Beispiel der Abnahme des gemessenen Widerstandes bei sinkender Spaltgröße, mit Effekten der Bearbeitung selbst, zum Beispiel eine zusätzliche Abnahme des Widerstandes durch eine Erhöhung der Leitfähigkeit des Elektrolyten durch die Aufnahme von aufgelösten Metallionen.

### Offenbarung der Erfindung

### Vorteile der Erfindung

Das erfindungsgemäße Verfahren zur Einstellung eines Abstandes zwischen einer Elektrode und einem Werkstück bei der eleictrochemischen Metallbearbeitung, wobei die Elektrode von einem oszillierenden Antriebssystem bewegt wird, umfasst folgende Schritte:
(a) Aufnahme eines Beschleunigungssignales des oszillierenden Antriebssystems,
(b) Zerlegen des Beschleunigungssignales in einzelne Abschnitte,
(c) Bestimmung charakteristischer Größen der einzelnen Abschnitte des Beschleunigungssignales,
(d) Vergleich der in Schritt (c) bestimmten charakteristischen Größen der einzelnen Abschnitte miteinander,
(e) Anpassen des Abstandes der Elektrode zum Werkstück bei einer Abweichung der charakteristischen Größe von den vorgegebenen Werten.

Vorteil der Einstellung des Abstandes durch Auswertung des Beschleunigungssignales ist, dass die Abstandsbestimmung unabhängig von den elektrischen Bedingungen, zum Beispiel der Leitfähigkeit oder der Bearbeitungsparameter, ist.

Das Beschleunigungssignal des oszillierenden Antriebssystemes hat im Allgemeinen eine einfache Struktur, wodurch eine einfache und robuste Auswertelogik ermöglicht wird. Es wird ausgenutzt, dass sich in der Vertiefung durch die Oszillationsbewegung Drücke und somit Kräfte ausbilden, die der Bewegung des oszillierenden Antriebssystems entgegenwirken. Diese durch das System selbst erzeugten Drücke sind dabei proportional zum Abstand zwischen dem Werkstück und der Elektrode. Mit abnehmendem Abstand ergeben sich Verzerrungen des Beschleunigungsverhaltens aufgrund der Wirkungen der Kräfte des Antriebssystems und der Drücke im Werkstück. Diese Verzerrungen können auf einfache Weise gemessen werden. Ein übliches oszillierendes Antriebssystem umfasst eine Antriebsachse, an der die Beschleunigungen mit Hilfe eines Beschleunigungssensors erfasst werden können.

In einer bevorzugten Ausführungsform sind die Abschnitte, in die das Beschleunigungssignal in Schritt (b) zerlegt wird, vier Viertelkurven einer Oszillationsperiode. Eine derartige Oszillationsperiode ist üblicherweise sinusförmig, trapezförmig oder rechteckförmig. Weiterhin ist es auch möglich, dass eine Oszillationsperiode eine Ruhephase umfasst, in der die Elektrode nicht bewegt wird. Bei einer regelmäßigen Oszillationsbewegung ergibt sich üblicherweise eine obere und eine untere Halbwelle. Durch die Bestimmung der Mittelpunkte der beiden Halbwellen lassen sich die Viertelwellen bestimmen. Bei einer regelmäßigen Oszillationsbewegung sind die Beträge der Integrale der vier Viertelwellen identisch. Auch sind die Hüllkurven identisch, wobei diese jeweils um eine Achse gespiegelt sein können. Eine solche regelmäßige OsziHationskurve, bei der die Integrale der vier Viertelwellen den gleichen Betrag aufweisen, die Hüllkurven identisch sind und die Ableitungen jeweils den gleichen Betrag aufweisen, liegt dann vor, wenn der Abstand zwischen der Elektrode und dem Werkstück so groß ist, dass keine Druckkräfte in der Vertiefung auf die Elektrode wirken. Sobald Druckkräfte auf die Elektrode wirken, ergeben sich Verzerrungen in der zweiten Halbwelle, d. h. der Halbwelle, bei der die Elektrode ihren geringsten Abstand zum Werkstück erreicht.

Die charakteristischen Größen, die in Schritt (c) bestimmt werden, werden vorzugsweise durch Integration, Differenzierung und Bildung der Hüllkurven der Viertelwellen bestimmt.

In einer bevorzugten Ausführungsform werden die charakteristischen Größen, die in Schritt (c) bestimmt worden sind, mit vorgegebenen Werten zur Bestimmung des Abstandes verglichen. Die vorgegebenen Werte, mit denen die charakteristischen Größen verglichen werden, können zum Beispiel durch eine Kalibrierung ermittelt werden. Wenn die charakteristischen Größen von den vorgegebenen Werten abweichen, kann der Abstand der Elektrode zum Werkstück angepasst werden. Wird zum Beispiel durch die Abweichung der charakteristischen Größen von den vorgegebenen Werten erkannt, dass der Abstand zwischen Elektrode und Werkstück zu groß ist, so kann dieser Abstand verkleinert werden. Entsprechend lässt sich auch bei einem zu kleinen Abstand der Abstand vergrößern.

Anstelle der Kalibrierung, durch die die vorgegebenen Werte ermittelt werden, ist es auch möglich, dass der Steuerung für bestimmte Größen Regelsätze, zum Beispiel die Integrale der Viertelwellen, hinterlegt werden und eine Regelung basierend auf diesen Regelsätzen durchgeführt wird.

Für die Kalibrierung zur Ermittlung der vorgegebenen Werte, mit denen die charakteristischen Größen verglichen werden, wird zum Beispiel der Abstand der oszillierenden Elektrode zum Boden einer Vertiefung mit bekannter Tiefe für unterschiedliche Eintauchtiefen eingestellt und das Beschleunigungssignal wird bei dem jeweiligen vorgegebenen Abstand aufgenommen.

Die Erfindung betrifft weiterhin eine Vorrichtung zur Durchführung des Verfahrens, eine Elektrode umfassend, die mit einer Antriebsachse verbunden ist, wobei über die Antriebsachse eine oszillierende Bewegung an die Elektrode übertragen werden kann. An der Antriebsachse ist ein Beschleunigungssensor angeordnet, der Beschleunigungssignale aufnimmt Vorzugsweise ist der Beschleunigungssensor mit einer Auswerteeinheit verbunden, in der die Beschleunigungssignale ausgewertet werden können. Hierdurch lässt sich eine automatisierte Einstellung des Abstandes zwischen der Elektrode und dem Werkstück erzielen.

### Kurze Beschreibung der Zeichnungen

Ausführungsbeispiele der Erfindung sind in den Zeichnungen dargestellt und in der nachfolgenden Beschreibung näher erläutert

Es zeigen:
- Figur 1.1: Entwicklung der Vertiefung bei kleinem Arbeitsspalt,
- Figur 1.2: Entwicklung der Vertiefung bei großem Arbeitsspalt,
- Figur 2: Ablaufschema des Verfahrens als Flussdiagramm,
- Figur 3.1: ein Beschleunigungssignal ohne Verzerrungen,
- Figur 3.2: ein Beschleunigungssignal mit Verzerrungen,
- Figur 3.3: Weg der Achse,
- Figur 4.1: Beschleunigungssignal ohne Verzerrungen mit Stillstand der Oszillationsbewegung,
- Figur 4.2: Beschleunigungssignal mit Verzerrungen bei einer Oszillationsbewegung mit Stillstand,
- Figur 4.3: den Weg der Achse bei einer Oszillationsbewegung mit Stillstand.

### Ausführungsformen der Erfindung

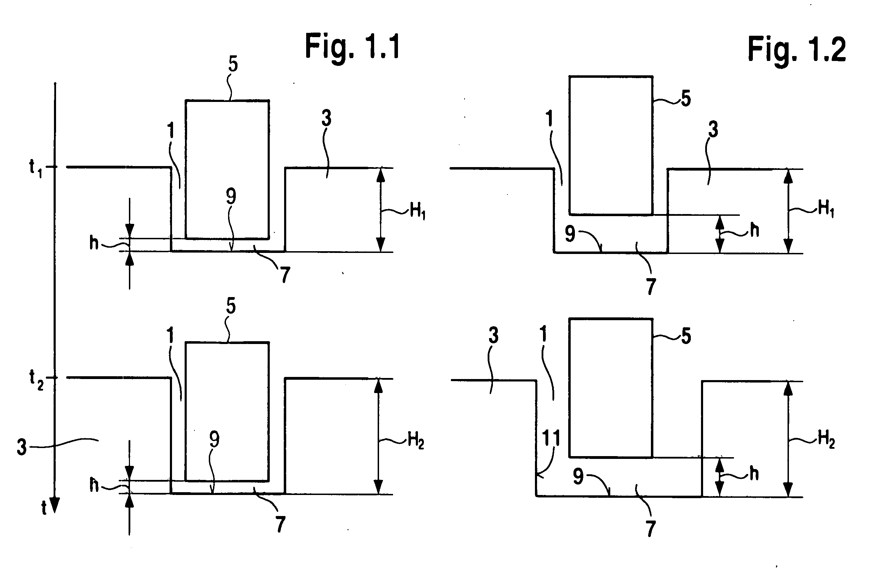

Figur 1.1 zeigt die Entwicklung einer Vertiefung in einem Werkstück bei kleinem Arbeitsspalt.

Um eine Vertiefung 1 in einem Werkstück 3 zu erzeugen, wird eine Elektrode 5 in das Werkstück 3 gesenkt. Damit sich durch das Senken der Elektrode 5 in das Werkstück 3 die Vertiefung 1 ausbilden kann, sind das Werkstück 3 anodisch und die Elektrode 5 kathodisch geschaltet. Zwischen dem Werkstück 3 und der Elektrode 5 fließt ein Strom, so dass sich das Werkstück 3 im Bereich der Elektrode 5 auflöst und die Vertiefung 1 ausbildet. Im Allgemeinen wird die Elektrode 5 von einem oszillierenden Antriebssystem bewegt. Hierdurch vergrößert und verkleinert sich ein Arbeitsspalt 7 zwischen der Elektrode 5 und dem Werkstück 3. Jeweils zu dem Zeitpunkt, zu dem der Arbeitsspalt 7 seinen kleinsten Abstand h erreicht hat, wird mindestens ein Strom-/Spannungspuls von der Elektrode 5 abgegeben. Hierdurch löst sich das Werkstück 3 am Boden 9 der Vertiefung 1 auf. Die Vertiefung 1 wird weiter im Werkstück 3 vorgetrieben.

Zu einem Zeitpunkt t₁ weist die Vertiefung 1 eine erste Tiefe H₁ auf. Zu einem zweiten Zeitpunkt t₂, der später liegt als der Zeitpunkt t₁, weist die Vertiefung 1 eine Tiefe H₂ auf. Eine Aufweitung der Vertiefung 1 erfolgt bei kleinem Arbeitsspalt 7, wie er in Figur 1.1 dargestellt ist, nicht.

In Figur 1.2 ist die Entwicklung der Vertiefung bei großem Arbeitsspalt dargestellt.

Zum Zeitpunkt t₁ hat die Vertiefung 1 die gleiche Form wie zum Zeitpunkt t₁ in Figur 1.1. Der mindestens eine Strom-/Spannungspuls wird von der Elektrode 5 jedoch bei einem größeren Arbeitsspalt 7 abgegeben. Dies führt dazu, dass sich die Vertiefung 1 auch lateral aufweitet. Zum Zeitpunkt t₂ hat die in Figur 1.2 erzeugte Vertiefung die gleiche Tiefe H₂ wie die Vertiefung 1 zum Zeitpunkt t₂ in Figur 1.1. Jedoch haben sich zum Zeitpunkt t₂ bei der in Figur 1.2 dargestellten Vertiefung auch die Seitenwände 11 der Vertiefung 1 aufgelöst, so dass sich die Vertiefung 1 lateral erweitert hat. Aus diesem Grund ist die Bearbeitung mit großem Arbeitsspalt 7, wie sie in Figur 1.2 dargestellt ist, nicht so präzise wie die Bearbeitung mit kleinem Arbeitsspalt 7, wie sie in Figur 1.1 dargestellt ist.

Für eine präzise Bearbeitung ist es somit vorteilhaft, wenn der Arbeitsspalt 7 möglichst klein gewählt wird und der Abstand h zwischen dem Werkstück 3 und der Elektrode 5 während des Erzeugens der Vertiefung 1 überwacht und gegebenenfalls neu eingestellt werden kann.

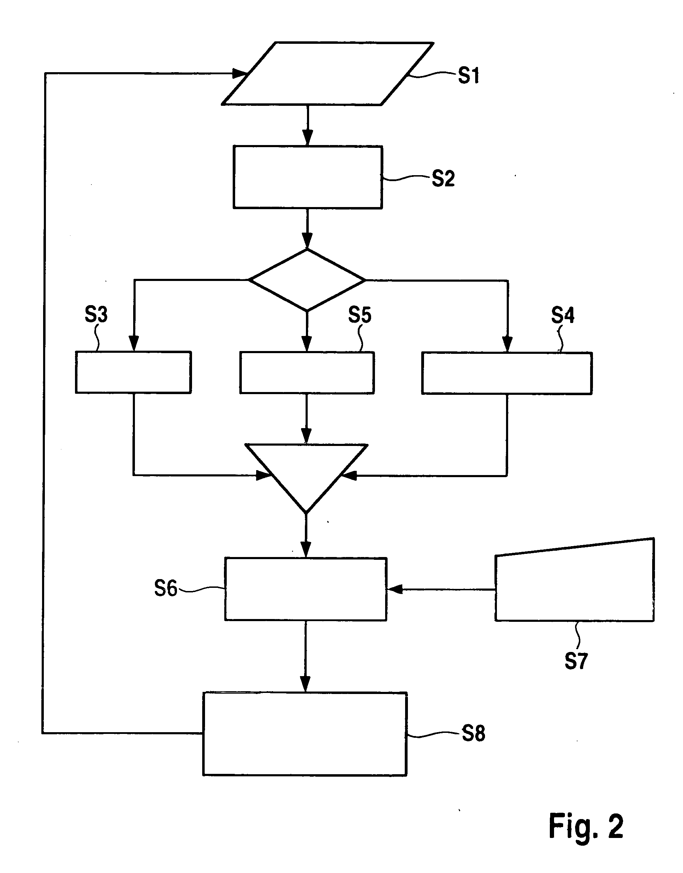

In Figur 2 ist ein Ablaufschema des erfindungsgemäßen Verfahrens zur Einstellung des Abstandes zwischen Elektrode und Werkstück als Flussdiagramm dargestellt.

In einem ersten Schritt S1 wird ein Beschleunigungssignal aufgenommen. Das Beschleunigungssignal wird zum Beispiel an einer Antriebsachse der Elektrode 5 mit Hilfe eines Beschleunigungssensors bestimmt. Es ist jedoch auch möglich, das Beschleunigungssignal direkt an der Elektrode 5 aufzunehmen. Aufgrund der oszillierenden Bewegung der Elektrode 5 hat auch das Beschleunigungssignal einen oszillierenden Verlauf.

In einem zweiten Schritt S2 werden aus dem Beschleunigungssignal für eine Oszillationsperiode Viertelwellen gebildet. Hierzu werden zunächst die obere und die untere Halbwelle des Beschleunigungssignales identifiziert. Nach der Identifikation der oberen und der unteren Halbwelle werden die Mittelpunkte der Halbwellen bestimmt. Die Mittelpunkte der Halbwellen trennen jeweils zwei Viertelwellen.

Aus den Viertelwellen, die in Schritt S2 bestimmt worden sind, werden als nächstes charakteristische Größen bestimmt. Hierzu werden die vier Viertelwellen zum Beispiel in einem Schritt S3 integriert und in einem Schritt S4 differenziert. In einem Schritt S5 werden weiterhin die Hüllkurven der Viertelwellen bestimmt. Die in den Schritten S3, S4 und S5 ermittelten charakteristischen Größen werden in einem Schritt S6 bewertet. Die Bewertung kann zum Beispiel durch Vergleich der berechneten Werte für die Viertelwellen untereinander erfolgen. Weiterhin ist es auch möglich, zur Bewertung vorgegebene Werte heranzuziehen, mit denen die in den Schritten S3, S4 und S5 gebildeten charakteristischen Größen verglichen werden können. Die vorgegebenen Werte können zum Beispiel durch eine Kalibrierung ermittelt werden. In dem in Figur 2 dargestellten Flussdiagramm ist die Vorgabe von Werten durch Schritt S7 dargestellt.

Abhängig von der in Schritt S6 durchgeführten Bewertung können in einem abschließenden Schritt S8 die Prozessparameter modifiziert werden. So kann zum Beispiel dann, wenn die Bewertung ergibt, dass der Arbeitsspalt 7 für eine präzise Bearbeitung zu groß ist, ein zusätzlicher Vorschub der Elektrode 5 erfolgen, um den Arbeitsspalt 7 wieder zu verkleinern. Ebenso ist es möglich, bei zu kleinem Arbeitsspalt 7 den Abstand zwischen Werkstück 3 und Elektrode 5 wieder etwas zu vergrößern. Bei einem zu kleinen Arbeitsspalt 7 besteht die Gefahr, dass sich Werkstück 3 und Elektrode 5 berühren und es zu einem Kurzschluss kommt.

Für die Kalibrierung zur Ermittlung der vorzugebenden Werte für den Vergleich mit den charakteristischen Größen bei der Bearbeitung werden zum Beispiel die Beschleunigungssignale für mehrere bekannte Abstände zwischen Elektrode und Werkstück aufgezeichnet. Dies erfolgt zum Beispiel dadurch, dass die Elektrode 5 in eine Vertiefung 1 mit bekannter Dimension eingefahren wird, bis die Elektrode 5 den Boden 9 der Vertiefung 1 berührt. Daran anschließend wird die Elektrode 5 um einen vorgegebenen Weg zurückgezogen. Nach dem Zurückziehen der Elektrode 5 wird die Oszillationsbewegung gestartet und das Beschleunigungssignal aufgenommen. Nach der Aufnahme des Beschleunigungssignales wird die Oszillationsbewegung beendet und die Elektrode 5 erneut um einen definierten Weg zurückgezogen. Der Abstand zwischen Elektrode 5 und Werkstück 3 wird hierdurch weiter vergrößert. Daran anschließend wird die Oszillationsbewegung erneut gestartet und das Beschleunigungssignal bei dem vergrößerten Abstand aufgenommen. Dieses Vorgehen wird wiederholt, bis eine ausreichende Anzahl von Messpunkten vorliegt. Die Anzahl der Messpunkte ist dabei abhängig von der Bearbeitungssituation. Die so aufgenommenen Signalverläufe werden anschließend ausgewertet und es kann eine Kalibrierungsfunktion erstellt werden.

Durch das erfindungsgemäße Verfahren kann auch erkannt werden, ob ein Durchbruch erzeugt worden ist. Die Durchbrucherkennung basiert dabei auf der Tatsache, dass sich die Druckverhältnisse in der Vertiefung 1 plötzlich ändern, wenn ein Durchbruch durch den Boden des Werkstückes 3 entsteht und die in der Vertiefung 1 enthaltene Flüssigkeit abfließen kann. Um den Zeitpunkt eines Durchbruchs zu erkennen, wird die Änderung der berechneten charakteristischen Größen im Vergleich zu zuvor bestimmten charakteristischen Größen permanent kontrolliert, und im Falle des Durchbruches können die erforderlichen Schritte zur Erreichung einer definierten Werkstückgeometrie eingeleitet werden. Wenn durch die elektrochemische Metallbearbeitung ein Durchbruch in einem Werkstück erzielt werden soll, kann durch die Durchbrucherkennung ermittelt werden, ob das Werkstück, welches bearbeitet wird, die korrekten Abmaße aufweist. Erfolgt der Durchbruch durch das Werkstück zum Beispiel zu früh, so wird hierdurch erkannt, dass die Dicke des Werkstückes zu niedrig ist. Genauso wird bei einem zu spät erfolgenden Durchbruch erkannt, dass das Werkstück zu dick ist. Wenn angezeigt wird, dass der Durchbruch zu früh oder zu spät erfolgt ist, lässt sich so das fehlerhafte Werkstück aussondern.

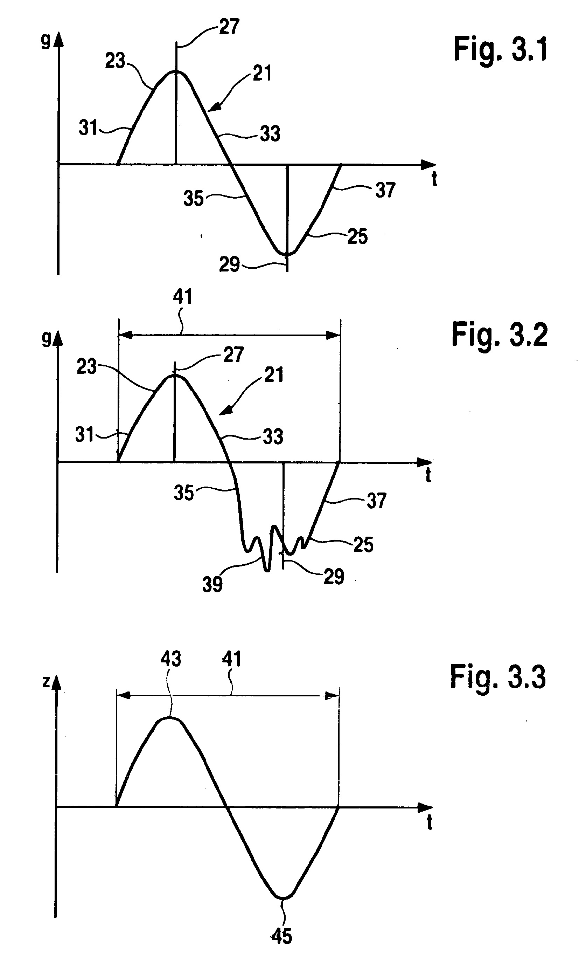

In den Figuren 3.1 bis 3.3 sind ein Beschleunigungssignal ohne Verzerrungen, ein Beschleunigungssignal mit Verzerrungen und der Weg der Achse bei einer Oszillationsbewegung ohne Stillstand dargestellt.

In den Figuren 3.1 und 3.2 ist jeweils auf der Ordinate die Beschleunigung und auf der Abszisse die Zeit und in Figur 3.3 auf der Ordinate der Weg und auf der Abszisse die Zeit dargestellt.

Ein Verlauf, wie er in Figur 3.1 dargestellt ist, ergibt sich für eine Oszillationsperiode, wenn der Abstand zwischen Werkstück 3 und Elektrode 5 groß ist. Durch den großen Abstand wirken keine Druckkräfte auf die Elektrode 5, die einen sichtbaren Einfluss auf die Beschleunigung ausüben. Bei einer sinusförmigen Oszillationsbewegung erhält man so auch einen sinusförmigen Verlauf des Beschleunigungssignales 21. Das Beschleunigungssignal 21 für eine Oszillationsperiode lässt sich in eine positive Halbwelle 23 und eine negative Halbwelle 25 teilen. Von den Halbwellen 23, 25 wird jeweils der Mittelpunkt bestimmt. Durch den Mittelpunkt 27 der positiven Halbwelle 23 wird die positive Halbwelle 23 in eine erste Viertelwelle 31 und eine zweite Viertelwelle 33 zerlegt. Durch den Mittelpunkt 29 der negativen Halbwelle 25 wird diese in eine dritte Viertelwelle 35 und eine vierte Viertelwelle 37 zerlegt. Bei einer gleichmäßigen Oszillationsbewegung sind die Beträge der Integrale der vier Viertelwellen 31, 33, 35, 37 identisch. Auch die Beträge der Ableitungen der vier Viertelwellen 31, 33, 35, 37 sind identisch. Zudem treten auch keine Vorzeichenwechsel bei den Ableitungen der vier Viertelwellen 31, 33, 35, 37 auf. Die Hüllkurven der vier Viertelwellen 31, 33, 35, 37 sind ebenfalls identisch.

Das in Figur 3.2 dargestellte Beschleunigungssignal 21 unterscheidet sich von dem in Figur 3.1 dargestellten durch Verzerrungen 39 in der negativen Halbwelle 25. Die Verzerrungen 39 führen zu unterschiedlichen Integralen, Ableitungen und Hüllkurven der dritten Viertelwelle 35 und der vierten Viertelwelle 37. Bei den Ableitungen treten aufgrund der Verzerrungen 39 Vorzeichenwechsel auf. Die Stärke der Verzerrungen ist dabei abhängig vom Abstand der Elektrode 5 zum Werkstück 3.

Figur 3.3 zeigt den Weg, den die Elektrode 5 um einen Ausgangspunkt zurücklegt. Bei einer oszillierenden Bewegung wird während einer Periodenlänge 41 die Elektrode 5 zunächst vom Werkstück 3 bis zum Erreichen eines oberen Umkehrpunktes 43 wegbewegt. Am oberen Umkehrpunkt 43 wird die Bewegung der Elektrode 5 umgekehrt. Die Elektrode 5 bewegt sich in Richtung zum Werkstück 3. An einem unteren Umkehrpunkt 45, bei dem der Abstand zwischen Elektrode 5 und Werkstück 3 am geringsten ist, wird die Bewegung der Elektrode 5 erneut geändert und die Elektrode 5 bewegt sich wieder vom Werkstück 3 weg. Am unteren Umkehrpunkt 45 ist der Abstand zwischen Elektrode 5 und Werkstück 3 am geringsten. Die zur elektrochemischen Metallbearbeitung erforderlichen Strom- beziehungsweise Spannungspulse werden vorzugsweise bei Erreichen des unteren Umkehrpunktes 45 abgegeben. Auch bei einem geringen Abstand zwischen Elektrode 5 und Werkstück 3 führt die Elektrode eine gleichmäßige Bewegung aus. Die Verzerrungen 39, die im Beschleunigungssignal 21 auftreten, haben keinen messbaren Einfluss auf die Bewegung der Elektrode 5.

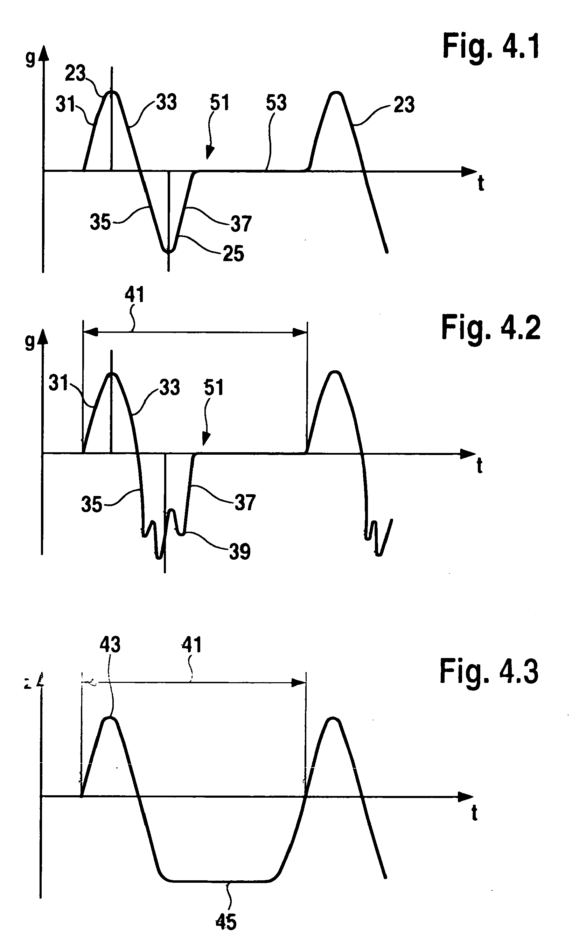

In den Figuren 4.1 und 4.2 sind Beschleunigungssignale bei einer Oszillationsbewegung der Elektrode mit Stillstandszeiten dargestellt.

Die Beschleunigungssignale 51 mit Stillstand der Elektrode 5 unterscheiden sich von den Beschleunigungssignalen 21 der Elektrode 5 mit Oszillationsbewegung ohne Stillstand dadurch, dass zwischen einer negativen Halbwelle 25 und der nachfolgenden positiven Halbwelle 23 der Wert der Beschleunigung während des Stillstandszeitraumes gleich Null ist. Dies ist im Diagramm gemäß Figur 4.1 durch die Nulllinie 53 dargestellt. Zur Bestimmung der charakteristischen Größen wird der Stillstandszeitraum des Bewegungssignales 51 nicht beachtet. Die positive Halbwelle 23 und die negative Halbwelle 25, die vom Beschleunigungssensor aufgenommen werden, während sich die Elektrode 5 bewegt, werden, wie auch bei der Oszillationsbewegung ohne Stillstandszeiten, wie sie in den Figuren 3.1 bis 3.3 dargestellt ist, in vier Viertelwellen 31, 33, 35, 37 zerlegt. Von den vier Viertelwellen 31, 33, 35, 37 werden wiederum die Integrale, Ableitungen und Hüllkurven gebildet, die als charakteristische Größen für die Bewertung herangezogen werden. Wie bei der Bewegung ohne Stillstandszeiten, wie sie in den Figuren 3.1 bis 3.3 dargestellt ist, ist auch bei der Oszillationsbewegung mit Stillstandszeiten das Beschleunigungssignal 51 bei einem großen Abstand zwischen Elektrode 5 und Werkstück 3 nicht verzerrt. Verzerrungen 39 treten auch hier auf, wenn der Abstand zwischen Werkstück 3 und Elektrode 5 klein ist. Dies ist in Figur 4.2 dargestellt.

Die Periodenlänge 41 umfasst bei der Oszillationsbewegung mit Stillstand, wie sie in den Figuren 4.1 bis 4.3 dargestellt ist, auch die Stillstandsphase, obwohl diese zur Bestimmung der charakteristischen Größen nicht herangezogen wird.

Das Wegsignal der Elektrode 5 bei einer Oszillationsbewegung mit Stillstand ist in Figur 4.3 dargestellt. Hier ist zu erkennen, dass der Stillstand am unteren Umkehrpunkt 45 erfolgt. Vorteil des Stillstandes der Elektrode 5 am unteren Umkehrpunkt 45 ist, dass eine längere Bearbeitungszeit ermöglicht wird. Es ist eine effektivere Bearbeitung möglich.

Anstelle der in den Figuren 3.1 bis 3.3 und 4.1 bis 4.3 dargestellten sinusförmigen Bewegung der Elektrode 5 ist das erfindungsgemäße Verfahren auch für jede beliebige andere regelmäßige Oszillationsbewegung anwendbar. So kann die Oszillationsbewegung zum Beispiel rechteckförmig, trapezförmig, in Form eines abgerundeten Rechteckes oder jeder anderen, dem Fachmann bekannten Form erfolgen. Für das erfindungsgemäße Verfahren ist es lediglich erforderlich, dass eine periodische Bewegung der Elektrode 5 vorliegt.

## Patentansprüche

1. Verfahren zur Einstellung der Abstandes (h) zwischen einer Elektrode (5) und einem Werkstück (3) bei der elektrochemischen Metallbearbeitung, wobei die Elektrode (5) von einem oszillierenden Antriebssystem bewegt wird, folgende Schritte umfassend:
(a) Aufnahme eines Beschleunigungssignales (21, 51) des oszillierenden Antriebssystems,
(b) Zerlegen des Beschleunigungssignales (21, 51) in einzelne Abschnitte (31, 33, 35, 37),
(c) Bestimmung charakteristischer Größen der einzelnen Abschnitte (31, 33, 35, 37) des Beschleunigungssignales (21, 51),
(d) Vergleich der in Schritt (c) bestimmten charakteristischen Größen der einzelnen Abschnitte (31, 33, 35, 37) miteinander,
(e) Anpassen des Abstandes (h) der Elektrode (5) zum Werkstück (3) bei einer Abweichung der charakteristischen Größen von den vorgegebenen Werten.

2. Verfahren nach Anspruch 1, **dadurch gekennzeichnet, dass** die Abschnitte, in die das Beschleunigungssignal in Schritt-(b) zerlegt wird, vier Viertelwellen (31, 33, 35, 37) einer Oszillationsperiode sind.

3. Verfahren nach Anspruch 2, **dadurch gekennzeichnet, dass** die charakteristischen Größen durch Integration, Differenzierung und Bildung der Hüllkurven der Viertelwellen (31, 33, 35, 37) bestimmt werden.

4. Verfahren nach einem der Ansprüche 1 bis 3, **dadurch gekenntzeichnet, dass** die charakteristischen Größen mit vorgegebenen Werten zur Bestimmung des Abstandes (h) verglichen werden.

5. Verfahren nach Anspruch 4, **dadurch gekennzeichnet, dass** die vorgegebenen Werte, mit denen die charakteristischen Größen verglichen werden, durch eine Kalibrierung ermittelt werden.

6. Verfahren nach Anspruch 5, **dadurch gekennzeichnet, dass** zur Kalibrierung der Abstand (h) der oszillierenden Elektrode (5) zum Boden (9) einer Vertiefung (1) mit bekannter Tiefe für unterschiedliche Eintauchtiefen der Elektrode (5) in die Vertiefung (1) eingestellt wird und das Beschleunigungssignal bei dem jeweiligen vorgegebenen Abstand aufgenommen wird.

7. Vorrichtung zur Durchführung des Verfahrens nach einem der Ansprüche 1 bis 6, eine Elektrode (5) umfassend, die mit einer Antriebsachse verbunden ist, wobei über die Antriebsachse eine oszillierende Bewegung an die Elektrode (5) übertragen werden kann, **dadurch gekennzeichnet, dass** an der Antriebsachse ein Beschleunigungssensor angeordnet ist, der Beschleunigungssignale (21, 51) aufnimmt

8. Vorrichtung nach Anspruch 7, **dadurch gekennzeichnet, dass** der Beschleunigungssensor mit einer Auswerteeinheit verbunden ist, in der die Beschleunigungssignale (21, 51) ausgewertet werden können.

## Claims

1. Method for adjusting a distance (h) between an electrode (5) and a workpiece (3) in electrochemical metal working, the electrode (5) being moved by an oscillating drive system, comprising the following steps:
(a) picking-up of an acceleration signal (21, 51) of the oscillating drive system,
(b) decomposition of the acceleration signal (21, 51) into individual sections (31, 33, 35, 37),
(c) determination of characteristic variables of the individual sections (31, 33, 35, 37) of the acceleration signal (21, 51),
(d) intercomparison of the characteristic variables determined in step (c) of the individual sections (31, 33, 35, 37),
(e) adjusting the distance (h) of the electrode (5) from the workpiece (3) upon a deviation of the characteristic variables from the prescribed values.

2. Method according to Claim 1, **characterized in that** the sections into which the acceleration signal is decomposed in step (b) are four quarter waves (31, 33, 35, 37) of one oscillation period.

3. Method according to Claim 2, **characterized in that** the characteristic variables are determined by integration, differentiation and the formation of the envelopes of the quarter waves (31, 33, 35, 37).

4. Method according to one of Claims 1 to 3, **characterized in that** the characteristic variables are compared with prescribed values in order to determine the distance (h).

5. Method according to Claim 4, **characterized in that** the prescribed values with which the characteristic variables are compared are determined by a calibration.

6. Method according to Claim 5, **characterized in that** for the purpose of calibration, the distance (h) of the oscillating electrode (5) from the bottom (9) of a depression (1) of known depth is set for different immersion depths of the electrode (5) in the depression (1), and the acceleration signal is picked up for the respective prescribed spacing.

7. Device for carrying out the method according to one of Claims 1 to 6, comprising an electrode (5) which is connected to a drive axis, it being possible to use the drive axis to transmit an oscillating movement to the electrode (5), **characterized in that** there is arranged on the drive axis an acceleration sensor which picks up acceleration signals (21, 51).

8. Device according to Claim 7, **characterized in that** the acceleration sensor is connected to an evaluation unit which can evaluate the acceleration signals (21, 51).

## Revendications

1. Procédé d'ajustement de la distance (h) entre une électrode (5) et une pièce (3) dans un traitement électrochimique de métaux, dans lequel l'électrode (5) est déplacée par un système d'entraînement oscillant, le procédé comportant les étapes suivantes :
(a) réception d'un signal d'accélération (21, 51) du système d'entraînement oscillant,
(b) décomposition du signal d'accélération (21, 51) en parties distinctes (31, 33, 35, 37),
(c) détermination des grandeurs caractéristiques des différentes parties (31, 33, 35, 37) du signal d'accélération (21, 51),
(d) comparaison des grandeurs caractéristiques, déterminées à l'étape (c), des différentes parties (31, 33, 35, 37) les unes avec les autres,
(e) adaptation de la distance (h) de l'électrode (5) par rapport à la pièce (3) en cas d'écart entre les grandeurs caractéristiques et leur valeur prédéterminée.

2. Procédé selon la revendication 1, **caractérisé en ce que** les parties en lesquelles le signal d'accélération est décomposé à l'étape (b) sont les quatre quarts d'onde (31, 33, 35, 37) d'une période d'oscillation.

3. Procédé selon la revendication 2, **caractérisé en ce que** les grandeurs caractéristiques sont déterminées par intégration, formation de la dérivée et formation des courbes d'enveloppe des quarts d'onde (31, 33, 35, 37).

4. Procédé selon l'une des revendications 1 à 3, **caractérisé en ce que** les grandeurs caractéristiques sont comparées à des valeurs prédéterminées pour déterminer la distance (h).

5. Procédé selon la revendication 4, **caractérisé en ce que** les valeurs prédéterminées auxquelles les grandeurs caractéristiques sont comparées sont déterminées par un étalonnage.

6. Procédé selon la revendication 5, **caractérisé en ce que** pour l'étalonnage, la distance (h) entre l'électrode oscillante (5) et le fond (9) d'un creux (1) de profondeur connue est réglée pour différentes profondeurs d'enfoncement de l'électrode (5) dans le creux (1) et **en ce que** le signal d'accélération est enregistré pour chaque distance prédéterminée.

7. Dispositif en vue de l'exécution du procédé selon l'une des revendications 1 à 6, et comprenant une électrode (5) reliée à un axe d'entraînement, un déplacement oscillant pouvant être transmis à l'électrode (5) par l'intermédiaire de l'axe d'entraînement,
**caractérisé en ce que**
un détecteur d'accélération qui reçoit les signaux d'accélération (21, 51) est disposé sur l'axe d'entraînement.

8. Dispositif selon la revendication 7, **caractérisé en ce que** le détecteur d'accélération est relié à une unité d'évaluation dans laquelle les signaux d'accélération (21, 51) peuvent être évalués.
